# EUROPEAN PATENT SPECIFICATION

(11) **EP 4 309 110 B1**
(45) Date of publication and mention of the grant of the patent: **07.01.2026**
(21) Application number: 21931386.3
(22) Date of filing: 31.05.2021
(51) Int. Cl.: B66B 1/34, B66B 5/02, B66B 1/24, G06N 20/10, G06Q 10/063, G06Q 50/10, G06N 3/084

(54) **SYSTEM AND METHOD FOR CONTROLLING MULTIDIRECTIONAL OPERATION OF AN ELEVATOR**
SYSTEM UND VERFAHREN ZUR STEUERUNG DES MULTIDIREKTIONALEN BETRIEBS EINES AUFZUGS
SYSTÈME ET PROCÉDÉ DE COMMANDE DU FONCTIONNEMENT MULTIDIRECTIONNEL D'UN ASCENSEUR

(30) Priority: 19.03.2021 IN 202141011817
(43) Date of publication of application: 24.01.2024
(73) Proprietor: Babu, Killakathu Ramanathan, Chennai - 600 020 Tamilnadu (IN)
(72) Inventor: Babu, Killakathu Ramanathan, Chennai - 600 020 Tamilnadu (IN)
(74) Representative: Caldon, Giuliano
(86) International application number: PCT/IB2021/054743
(87) International publication number: WO 2022/195335

(56) References cited:
- CN-B- 108 083 044
- CN-B- 108 083 044
- KR-B1- 102 035 557
- KR-B1- 102 035 557
- US-B2- 10 494 229

## Description

### EARLIEST PRIORITY DATE:

This Application claims priority from a Complete patent application filed in India having Patent Application No. 202141011817, filed on March 19, 2021 and titled "SYSTEM AND METHOD FOR CONTROLLING MULTIDIRECTIONAL OPERATION OF AN ELEVATOR".

### BACKGROUND

Embodiments of the present disclosure relate to an elevator controlling system and more particularly, to a system and a method for controlling multidirectional operation of an elevator.

Elevators and escalators have been the key enabler in the vertical development essential to the urbanization of the world's cities from time to time. The elevators are used in a large number of buildings all over the world for fast and comfortable transportation. For larger buildings, there have been efforts at arranging an elevator system to maximize customer service and to enhance passenger traffic flow. Traditionally, larger and higher speed elevator systems are used for carrying passengers more frequently. Generally, in such elevator systems there are practical limits on cabin size and speeds which is further overcome with technological development.

Conventionally, the system available for controlling operation of the elevator includes manually estimating one or more requirements such as charging requirement of the elevator cabins, a parking requirement after standard operation and the like. However, such a conventional system with involvement of the manual intervention provides inaccurate results in terms of sequencing of the one or more elevator cabins based on priority. Also, such a conventional system provides inaccurate prediction of charging requirement of the one or more elevator cabins. Moreover, such a conventional system is incapable of controlling the smooth functioning of the one or more elevator cabins which further creates chaos by increasing the passenger traffic.

Hence, there is a need for an improved system and a method for controlling multidirectional operation of an elevator in order to address the aforementioned issues. US 10 494 229 B2 discloses a multicar ropeless elevator system according to the state of the art.

### BRIEF DESCRIPTION

In accordance with an embodiment of the present disclosure, a system for controlling multidirectional operation of an elevator is disclosed. The system includes a processing subsystem hosted on a server. The processing subsystem is configured to execute on a network to control bidirectional communications among a plurality of modules. The processing subsystem includes a centralized elevator control module configured to receive a control signal representative of elevator operation from one or more control units deployed at one or more elevator cabins plying within a passageway. The processing subsystem also includes a usage pattern generation module operatively coupled to the centralized elevator control module. The usage pattern generation module is configured to determine a usage pattern of the one or more elevator cabins in real-time based on the control signal received from the one or more control units. The usage pattern generation module is also configured to utilize a learning model to learn the usage pattern of the one or more elevator cabins using an elevator usage pattern learning technique over a period of time. The processing subsystem also includes an elevator operation evaluation module operatively coupled to the usage pattern generation module. The elevator operation evaluation module is configured to identify deviation of one or more operational parameters associated with the one or more elevator cabins from corresponding predetermined threshold limits respectively. The elevator operation evaluation module is also configured to detect operational failure of the one or more elevator cabins in an event of operation by employing the learning model upon detection of the one or more operational parameters deviated. The processing subsystem also includes an elevator rescue module operatively coupled to the elevator operation evaluation module. The elevator rescue module is configured to receive a rescue command from the centralized elevator control module to initiate a rescue process based on the operational failure of the one or more elevator cabins detected. The elevator rescue module is also configured to identify one or more rescue elevator cabins in proximity to the one or more elevator cabins failed for the rescue process based on a plurality one or more performance objectives. The elevator rescue module is also configured to activate the one or more rescue elevator cabins identified for flawless operation of transporting a plurality of passengers from a source to destination in an event of emergency.

In accordance with another embodiment of the present disclosure, a method for controlling multidirectional operation of an elevator is disclosed. The method includes receiving, by a centralized elevator control module, a control signal representative of elevator operation from one or more control units deployed at one or more elevator cabins plying within a passageway. The method also includes determining, by a usage pattern generation module, a usage pattern of the one or more elevator cabins in real-time based on the control signal received from the one or more control units. The method also includes utilizing, by the usage pattern generation module, a learning model to learn the usage pattern of the one or more elevator cabins using an elevator usage pattern learning technique over a period of time. The method also includes identifying, by the elevator operation evaluation module, deviation of one or more operational parameters associated with the one or more elevator cabins from corresponding predetermined threshold limits respectively. The method also includes detecting, by the elevator operation evaluation module, operational failure of the one or more elevator cabins in an event of operation by employing the learning model upon detection of the one or more operational parameters deviated. The method also includes receiving, by an elevator rescue module, a rescue command from the centralized elevator control module to initiate a rescue process based on the operational failure of the one or more elevator cabins detected. The method also includes identifying, by the elevator rescue module, one or more rescue elevator cabins in proximity to the one or more elevator cabins failed for the rescue process based on a plurality one or more performance objectives. The method also includes activating, by the elevator rescue module, the one or more rescue elevator cabins identified for flawless operation of transporting a plurality of passengers from a source to destination in an event of emergency.

To further clarify the advantages and features of the present disclosure, a more particular description of the disclosure will follow by reference to specific embodiments thereof, which are illustrated in the appended figures. It is to be appreciated that these figures depict only typical embodiments of the disclosure and are therefore not to be considered limiting in scope. The disclosure will be described and explained with additional specificity and detail with the appended figures.

### BRIEF DESCRIPTION OF THE DRAWINGS

The disclosure will be described and explained with additional specificity and detail with the accompanying figures in which:
FIG. 1 is a block diagram of a system for controlling multidirectional operation of an elevator in accordance with an embodiment of the present disclosure;
FIG. 2 is a block diagram representation of an embodiment of a system for controlling multidirectional operation of an elevator of FIG. 1 in accordance with an embodiment of the present disclosure;
FIG. 3 illustrates a schematic representation of an exemplary embodiment of a system for controlling multidirectional operation of an elevator of FIG. 1 in accordance with an embodiment of the present disclosure;
FIG. 4 is a block diagram of a computer or a server in accordance with an embodiment of the present disclosure; and
FIG. 5 (a) and FIG. 5 (b) is a flow chart representing the steps involved in a method for controlling multidirectional operation of an elevator of FIG. 1 in accordance with the embodiment of the present disclosure.

Further, those skilled in the art will appreciate that elements in the figures are illustrated for simplicity and may not have necessarily been drawn to scale. Furthermore, in terms of the construction of the device, one or more components of the device may have been represented in the figures by conventional symbols, and the figures may show only those specific details that are pertinent to understanding the embodiments of the present disclosure so as not to obscure the figures with details that will be readily apparent to those skilled in the art having the benefit of the description herein.

### DETAILED DESCRIPTION

For the purpose of promoting an understanding of the principles of the disclosure, reference will now be made to the embodiment illustrated in the figures and specific language will be used to describe them. It will nevertheless be understood that no limitation of the scope of the disclosure is thereby intended. Such alterations and further modifications in the illustrated system, and such further applications of the principles of the disclosure as would normally occur to those skilled in the art are to be construed as being within the scope of the present disclosure.

The terms "comprises", "comprising", or any other variations thereof, are intended to cover a non-exclusive inclusion, such that a process or method that comprises a list of steps does not include only those steps but may include other steps not expressly listed or inherent to such a process or method. Similarly, one or more devices or sub-systems or elements or structures or components preceded by "comprises... a" does not, without more constraints, preclude the existence of other devices, sub-systems, elements, structures, components, additional devices, additional sub-systems, additional elements, additional structures or additional components. Appearances of the phrase "in an embodiment", "in another embodiment" and similar language throughout this specification may, but not necessarily do, all refer to the same embodiment.

Unless otherwise defined, all technical and scientific terms used herein have the same meaning as commonly understood by those skilled in the art to which this disclosure belongs. The system, methods, and examples provided herein are only illustrative and not intended to be limiting.

In the following specification and the claims, reference will be made to a number of terms, which shall be defined to have the following meanings. The singular forms "a", "an", and "the" include plural references unless the context clearly dictates otherwise.

Embodiments of the present disclosure relate to a system and a method for controlling multidirectional operation of an elevator. The system includes a processing subsystem hosted on a server. The processing subsystem is configured to execute on a network to control bidirectional communications among a plurality of modules. The processing subsystem includes a centralized elevator control module configured to receive a control signal representative of elevator operation from one or more control units deployed at one or more elevator cabins plying within a passageway. The processing subsystem also includes a usage pattern generation module operatively coupled to the centralized elevator control module. The usage pattern generation module is configured to determine a usage pattern of the one or more elevator cabins in real-time based on the control signal received from the one or more control units. The usage pattern generation module is also configured to utilize a learning model to learn the usage pattern of the one or more elevator cabins using an elevator usage pattern learning technique over a period of time. The processing subsystem also includes an elevator operation evaluation module operatively coupled to the usage pattern generation module. The elevator operation evaluation module is configured to identify deviation of one or more operational parameters associated with the one or more elevator cabins from corresponding predetermined threshold limits respectively. The elevator operation evaluation module is also configured to detect operational failure of the one or more elevator cabins in an event of operation by employing the learning model upon detection of the one or more operational parameters deviated. The processing subsystem also includes an elevator rescue module operatively coupled to the elevator operation evaluation module. The elevator rescue module is configured to receive a rescue command from the centralized elevator control module to initiate a rescue process based on the operational failure of the one or more elevator cabins detected. The elevator rescue module is also configured to identify one or more rescue elevator cabins in proximity to the one or more elevator cabins failed for the rescue process based on a plurality one or more performance objectives. The elevator rescue module is also configured to activate the one or more rescue elevator cabins identified for flawless operation of transporting a plurality of passengers from a source to destination in an event of emergency.

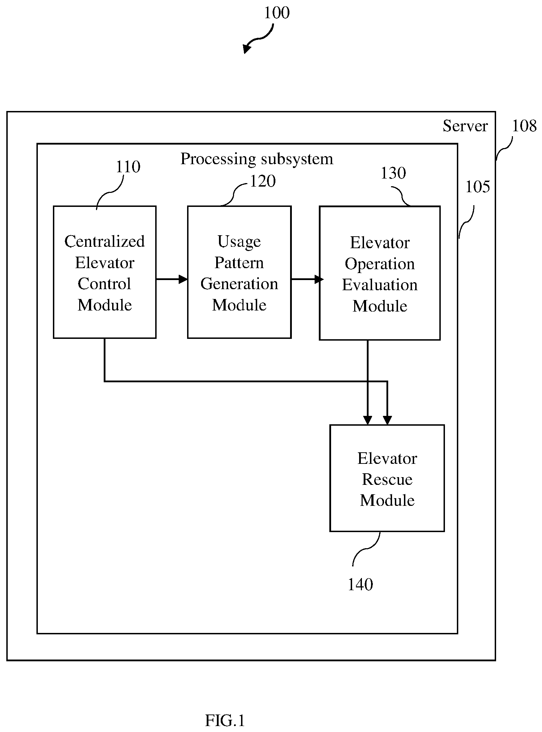

FIG. 1 is a block diagram of a system (100) for controlling multidirectional operation of an elevator in accordance with an embodiment of the present disclosure. The system (100) includes a processing subsystem (105) hosted on a server (108). In one embodiment, the server (108) may include a cloud server. In another embodiment, the server (108) may include a local server. The processing subsystem (105) is configured to execute on a network (not shown in FIG. 1) to control bidirectional communications among a plurality of modules. In one embodiment, the network may include a wired network such as local area network (LAN). In another embodiment, the network may include a wireless network such as Wi-Fi, Bluetooth, Zigbee, near field communication (NFC), infra-red communication (RFID) or the like.

The processing subsystem (105) includes a centralized elevator control module (110) configured to receive a control signal representative of elevator operation from one or more control units deployed at one or more elevator cabins plying within a passageway. In a specific embodiment, the centralized elevator control module may be located in a local server room. In one embodiment, the one or more control units may include one or more microcontrollers for enabling intercommunication between the one or more elevator cabins via a communication protocol. In such embodiment, the communication protocol may include a wired communication protocol. In another embodiment, the communication protocol may include a wireless communication protocol.

The processing subsystem (105) also includes a usage pattern generation module (120) operatively coupled to the centralized elevator control module (110). The usage pattern generation module (120) is configured to determine a usage pattern of the one or more elevator cabins in real-time based on the control signal received from the one or more control units. In one embodiment, the usage pattern may include at least one of a standard wait time of the one or more elevator cabins, a level of congestion for the one or more elevator cabins, a permissible load capacity of the one or more elevator cabins, a peak traffic hours for the one or more elevator cabins, a preferable home landing floor for each of the one or more elevator cabins, average number of passengers waiting on each floors, average speed of each of the one or more elevator cabins or a combination thereof.

The usage pattern generation module (120) is also configured to utilize a learning model to learn the usage pattern of the one or more elevator cabins using an elevator usage pattern learning technique over a period of time. As used herein, the term 'elevator usage pattern learning technique' is defined as an artificial intelligence technique which is capable of automatically controlling the operation of an elevator by self-learning. The learning model is trained to learn and predict the usage pattern of the one or more elevator cabins using the elevator usage pattern learning technique. In such embodiment, the elevator usage pattern technique includes at least one of a support vector machine technique, a back propagation neural network, a radial basis function neural network, a k-means clustering or a combination thereof.

The processing subsystem (105) also includes an elevator operation evaluation module (130) operatively coupled to the usage pattern generation module (120). The elevator operation evaluation module (130) is configured to identify deviation of one or more operational parameters associated with the one or more elevator cabins from corresponding predetermined threshold limits respectively. In one embodiment, the one or more operational parameters may include at least one of an elevator cabin's door opening time, an elevator cabin's door closing time, a rate of power supply for each of the one or more elevator cabins, power consumption by each of the one or more elevator cabins, a real-time speed of the one or more elevator cabins, number of loads carried by each of the one or more elevator cabins or a combination thereof. The elevator operation evaluation module (130) is also configured to detect operational failure of the one or more elevator cabins in an event of operation by employing the learning model upon detection of the one or more operational parameters deviated. In one embodiment, the operational failure may include a complete failure of the elevator system with multiple elevator cabins. In another embodiment, the operational failure may include individual failure of the one or more elevator cabins.

The processing subsystem (105) also includes an elevator rescue module (140) operatively coupled to the elevator operation evaluation module (130). The elevator rescue module (140) is configured to receive a rescue command from the centralized elevator control module to initiate a rescue process based on the operational failure of the one or more elevator cabins detected. The elevator rescue module (140) is also configured to identify one or more rescue elevator cabins in proximity to the one or more elevator cabins failed for the rescue process based on a plurality one or more performance objectives. In one embodiment, the one or more performance objectives may include at least one of a lower waiting time for the plurality of passengers, an optimal power efficiency of the one or more elevator cabins or a combination thereof. In such embodiment, the one or more performance objectives are computed upon identification of relation between total number of floors in a building, force propelled by the one or more elevator cabins, average and velocity of each of the one or more elevator cabins. The elevator rescue module is also configured to activate the one or more rescue elevator cabins identified for flawless operation of transporting a plurality of passengers from a source to destination in an event of emergency.

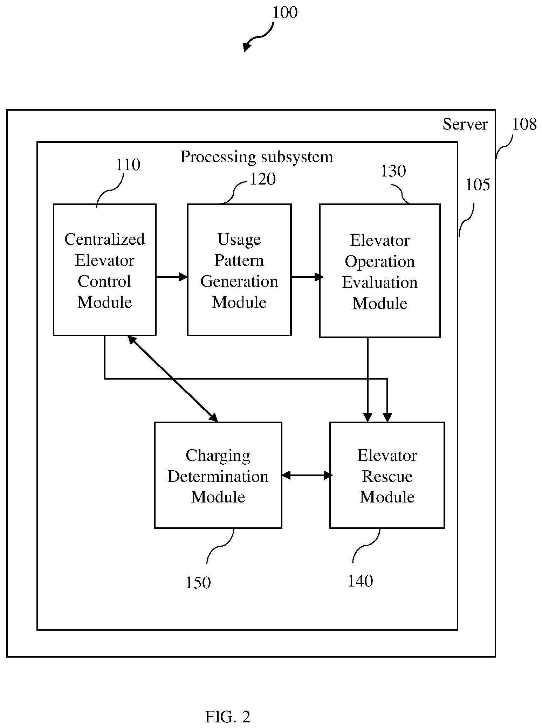

FIG. 2 is a block diagram representation of an embodiment of a system (100) for controlling multidirectional operation of an elevator of FIG. 1 in accordance with an embodiment of the present disclosure. As described in aforementioned FIG. 1, the system (100) includes a processing subsystem (105), which includes a centralized elevator control module (110), a usage pattern generation module (120), an elevator operation evaluation module (130) and an elevator rescue module (140). In addition, the processing subsystem also includes a charging determination module (150) configured to determine a charging requirement of the one or more elevator cabins. The charging determination module (150) is also configured to allocate the one or more elevator cabins in a predefined charging station within the passageway for recharging in the event of the operation of transporting the plurality of passengers. The one or more elevator cabins are arranged on a horizontal shaft and such horizontal shaft is utilized for carrying the one or more elevator cabins to the predefined charging station within the passageway. In one embodiment, the predefined charging station may be located on a horizontal corridor of each floors of a building.

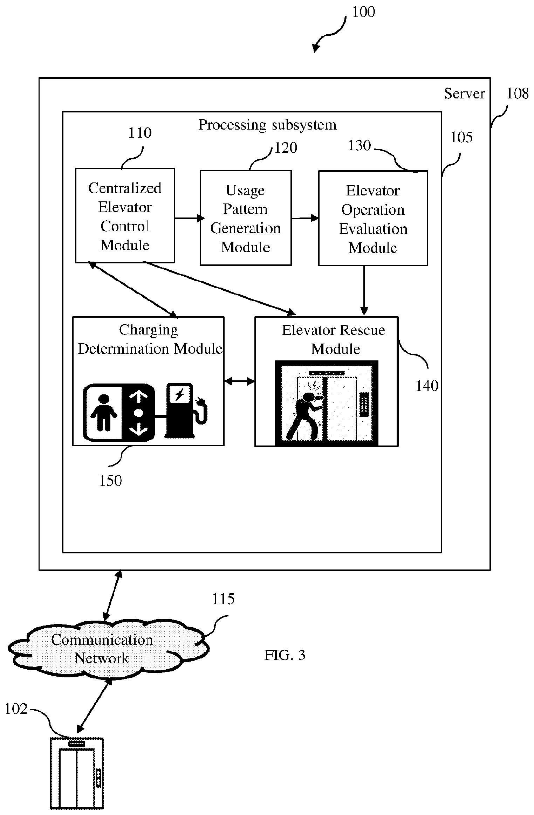

FIG. 3 illustrates a schematic representation of an exemplary embodiment of a system (100) for controlling multidirectional operation of an elevator of FIG.1 in accordance with an embodiment of the present disclosure. Considering an example, where the system (100) is utilized by a hotel where one or more multidirectional elevators are deployed for operation. The one or more multi-directional elevators transports a plurality of passengers from one floor of a building of the hotel to another floor. The system (100) utilized by the hotel enables optimized control of the one or more multidirectional elevators so that normal operation is not hampered. In the example used herein, lets assume that the hotel has one or more elevator cabins which are plying within a single passageway among each of the floors. Such one or more elevator cabins are multidirectional elevators which operates both in vertical direction as well as in horizontal direction across each of the floors in the building.

For controlling the operation of the one or more multidirectional elevator cabins, a centralized elevator control module (110) of a processing subsystem (105) receives a control signal representative of elevator operation from one or more control units deployed at the one or more elevator cabins plying within the passageway. Here, the processing subsystem (105) is hosted on a cloud server (108), wherein the processing subsystem (105) executes on a network (115) to control bidirectional communications among a plurality of modules. For example, the network may include a wireless communication network such as Wi-Fi, Bluetooth, Zigbee, near field communication (NFC), infra-red communication (RFID) or the like.

Based on the control signal received from the one or more control units of the elevator cabins, a usage pattern generation module (120) determines a usage pattern of the one or more elevator cabins in real-time. For example, the usage pattern may include at least one of a standard wait time of the one or more elevator cabins, a level of congestion for the one or more elevator cabins, a permissible load capacity of the one or more elevator cabins, a peak traffic hours for the one or more elevator cabins, a preferable home landing floor for each of the one or more elevator cabins, average number of passengers waiting on each floors, average speed of each of the one or more elevator cabins or a combination thereof. Also, the usage pattern module (120) utilizes a learning model to learn the usage pattern of the one or more elevator cabins using an elevator usage pattern learning technique over a period of time. The learning model is trained to learn and predict the usage pattern of the one or more elevator cabins using the elevator usage pattern learning technique. In such an example, the elevator usage pattern technique includes at least one of a support vector machine technique, a back propagation neural network, a radial basis function neural network, a k-means clustering or a combination thereof.

Once, the usage pattern is learned, an elevator operation evaluation module (130) identifies deviation of one or more operational parameters associated with the one or more elevator cabins from corresponding predetermined threshold limits respectively. In the example used herein, the one or more operational parameters may include at least one of an elevator cabin's door opening time, an elevator cabin's door closing time, a rate of power supply for each of the one or more elevator cabins, power consumption by each of the one or more elevator cabins, a real-time speed of the one or more elevator cabins, number of loads carried by each of the one or more elevator cabins or a combination thereof.

The elevator operation evaluation module (130) also detects operational failure of the one or more elevator cabins in an event of operation by employing the learning model upon detection of the one or more operational parameters deviated. In one scenario, the operational failure may include a complete failure of the elevator system with multiple elevator cabins. In another scenario, the operational failure may include individual failure of the one or more elevator cabins.

Again, based on the operational failure of the one or more elevator cabins detected, an elevator rescue module receives a rescue command from the centralized elevator control module to initiate a rescue process. The elevator rescue module (140) also identifies one or more rescue elevator cabins in proximity to the one or more elevator cabins failed for the rescue process based on a plurality one or more performance objectives. For example, the one or more performance objectives may include at least one of a lower waiting time for the plurality of passengers, an optimal power efficiency of the one or more elevator cabins or a combination thereof. In such an example, the one or more performance objectives are computed upon identification of relation between total number of floors in a building, force propelled by the one or more elevator cabins, average and velocity of each of the one or more elevator cabins. Also, the elevator rescue module activates the one or more rescue elevator cabins identified for flawless operation of transporting a plurality of passengers from a source to destination in an event of emergency.

Further, the processing subsystem (105) also includes a charging determination module (150) to determine a charging requirement of the one or more elevator cabins. The charging determination module (150) also allocates the one or more elevator cabins in a predefined charging station within the passageway for recharging in the event of the operation of transporting the plurality of passengers. The one or more elevator cabins are arranged on a horizontal shaft and such horizontal shaft is utilized for carrying the one or more elevator cabins to the predefined charging station within the passageway. In the example used herein, the predefined charging station may be located on a horizontal corridor of each floors of a building. Thus, the system (100) helps in identifying the requirement of the each of the one or more elevator cabins for maintenance as well as helps in optimized control of the one or more multidirectional elevators.

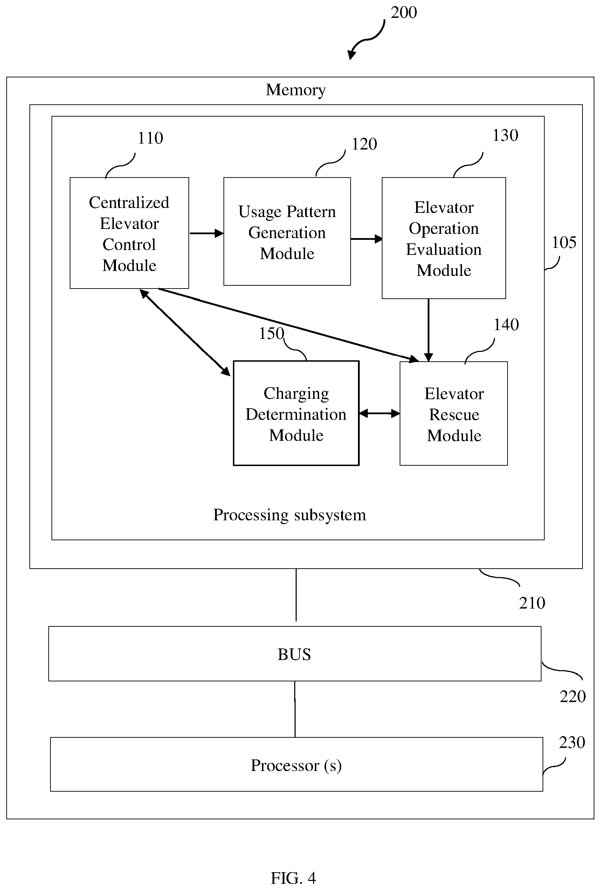

FIG. 4 is a block diagram of a computer or a server in accordance with an embodiment of the present disclosure. The server (200) includes processor(s) (230), and memory (210) operatively coupled to the bus (220). The processor(s) (230), as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a digital signal processor, or any other type of processing circuit, or a combination thereof.

The memory (210) includes several subsystems stored in the form of executable program which instructs the processor (230) to perform the method steps illustrated in FIG. 1. The memory (210) includes a processing subsystem (105) of FIG.1. The processing subsystem (105) further has following modules: a centralized elevator control module (110), a usage pattern generation module (120), an elevator operation evaluation module (130), an elevator rescue module (140), and a charging determination module (150).

The centralized elevator control module (110) configured to receive a control signal representative of elevator operation from one or more control units deployed at one or more elevator cabins plying within a passageway. The usage pattern generation module (120) configured to determine a usage pattern of the one or more elevator cabins in real-time based on the control signal received from the one or more control units. The usage pattern generation module (120) is also configured to utilize a learning model to learn the usage pattern of the one or more elevator cabins using an elevator usage pattern learning technique over a period of time. The elevator operation evaluation module (130) is configured to identify deviation of one or more operational parameters associated with the one or more elevator cabins from corresponding predetermined threshold limits respectively. The elevator operation evaluation module (130) is also configured to detect operational failure of the one or more elevator cabins in an event of operation by employing the learning model upon detection of the one or more operational parameters deviated. The elevator rescue module (140) is configured to receive a rescue command from the centralized elevator control module to initiate a rescue process based on the operational failure of the one or more elevator cabins detected. The elevator rescue module (140) is also configured to identify one or more rescue elevator cabins in proximity to the one or more elevator cabins failed for the rescue process based on a plurality one or more performance objectives. The elevator rescue module (140) is also configured to activate the one or more rescue elevator cabins identified for flawless operation of transporting a plurality of passengers from a source to destination in an event of emergency. The charging determination module (150) is configured to determine a charging requirement of the one or more elevator cabins. The charging determination module (150) is also configured to allocate the one or more elevator cabins in a predefined charging station within the passageway for recharging in the event of the operation of transporting the plurality of passengers.

The bus (220) as used herein refers to be internal memory channels or computer network that is used to connect computer components and transfer data between them. The bus (220) includes a serial bus or a parallel bus, wherein the serial bus transmits data in bit-serial format and the parallel bus transmits data across multiple wires. The bus (220) as used herein, may include but not limited to, a system bus, an internal bus, an external bus, an expansion bus, a frontside bus, a backside bus and the like.

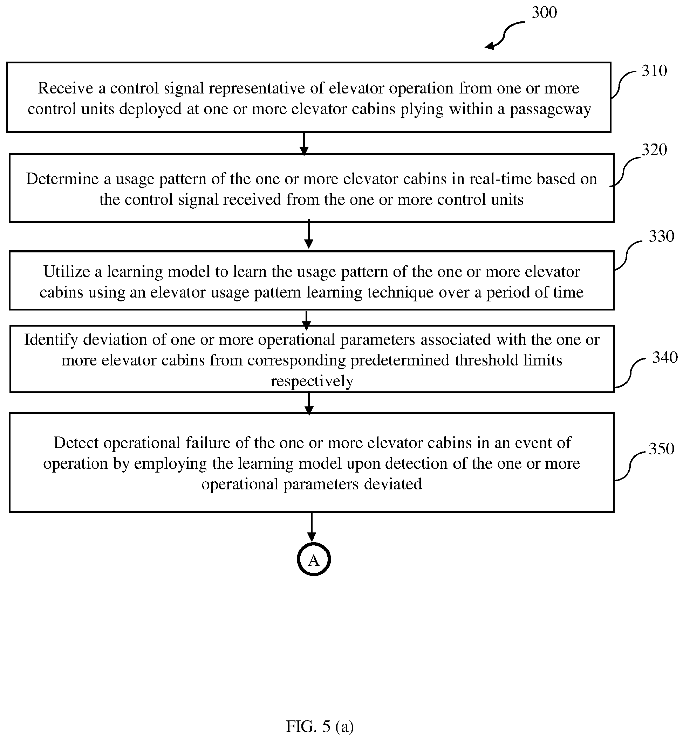

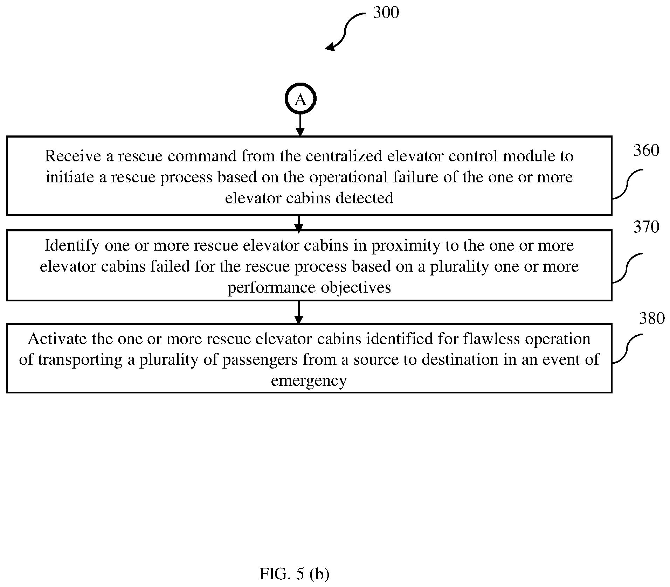

FIG. 5 is a flow chart representing the steps involved in a method (300) for controlling multidirectional operation of an elevator of FIG. 1 in accordance with the embodiment of the present disclosure. The method (300) includes receiving, by a centralized elevator control module, a control signal representative of elevator operation from one or more control units deployed at one or more elevator cabins plying within a passageway in step 310. In one embodiment, receiving the control signal representative of the elevator operation from the one or more control units may include receiving the control signal from one or more microcontrollers for enabling intercommunication between the one or more elevator cabins via a communication protocol. In such embodiment, the communication protocol may include a wired communication protocol. In another embodiment, the communication protocol may include a wireless communication protocol.

The method (300) also includes determining, by a usage pattern generation module, a usage pattern of the one or more elevator cabins in real-time based on the control signal received from the one or more control units in step 320. In one embodiment, determining the usage pattern of the one or more elevator cabins in the real-time may include determining at least one of a standard wait time of the one or more elevator cabins, a level of congestion for the one or more elevator cabins, a permissible load capacity of the one or more elevator cabins, a peak traffic hours for the one or more elevator cabins, a preferable home landing floor for each of the one or more elevator cabins, average number of passengers waiting on each floors, average speed of each of the one or more elevator cabins or a combination thereof.

The method (300) also includes utilizing, by the usage pattern generation module, a learning model to learn the usage pattern of the one or more elevator cabins using an elevator usage pattern learning technique over a period of time in step 330. In some embodiment, utilizing the learning model to learn the usage pattern of the one or more elevator cabins may include utilizing the learning model learn and predict the usage pattern of the one or more elevator cabins using the elevator usage pattern learning technique. In such embodiment, the elevator usage pattern technique includes at least one of a support vector machine technique, a back propagation neural network, a radial basis function neural network, a k-means clustering or a combination thereof.

The method (300) also includes identifying, by the elevator operation evaluation module, deviation of one or more operational parameters associated with the one or more elevator cabins from corresponding predetermined threshold limits respectively in step 340. In one embodiment, identifying the deviation of the one or more operational parameters associated with the one or more elevator cabins may include identifying deviation of at least one of an elevator cabin's door opening time, an elevator cabin's door closing time, a rate of power supply for each of the one or more elevator cabins, power consumption by each of the one or more elevator cabins, a real-time speed of the one or more elevator cabins, number of loads carried by each of the one or more elevator cabins or a combination thereof.

The method (300) also includes detecting, by the elevator operation evaluation module, operational failure of the one or more elevator cabins in an event of operation by employing the learning model upon detection of the one or more operational parameters deviated in step 350. In one embodiment, detecting the operational failure of the one or more elevator cabins may include detecting a complete failure of the elevator system with multiple elevator cabins. In another embodiment, detecting the operational failure may include detecting individual failure of the one or more elevator cabins.

The method (300) also includes receiving, by an elevator rescue module, a rescue command from the centralized elevator control module to initiate a rescue process based on the operational failure of the one or more elevator cabins detected in step 360. The method (300) also includes identifying, by the elevator rescue module, one or more rescue elevator cabins in proximity to the one or more elevator cabins failed for the rescue process based on one or more performance objectives in step 370. In a specific embodiment, identifying the one or more rescue elevator cabins for the rescue process based on the one or more performance objectives may include identifying the one or more rescue elevator cabins based on at least one of a lower waiting time for the plurality of passengers, an optimal power efficiency of the one or more elevator cabins or a combination thereof. In such embodiment, the one or more performance objectives are computed upon identification of relation between total number of floors in a building, force propelled by the one or more elevator cabins, average and velocity of each of the one or more elevator cabins. The method (300) also includes activating, by the elevator rescue module, the one or more rescue elevator cabins identified for flawless operation of transporting a plurality of passengers from a source to destination in an event of emergency in step 380.

Various embodiments of the present disclosure provide a system which helps in controlling operation of one or more multidirectional elevator cabins in an optimal manner thereby helps in efficient power management as well as manages operation time.

Moreover, the present disclosed system utilizes a self-learning approach for learning the usage pattern of the elevator cabins automatically and thus helps in determining the operational failure of the one or more elevator cabins easily.

Furthermore, the present disclosed system also helps in determining the charging requirement of the one or more elevator cabins in advance which not only manages the recharging process but also does not hamper the normal event of operation of the one or more elevators in plying the plurality of passengers from the source to the destination.

It will be understood by those skilled in the art that the foregoing general description and the following detailed description are exemplary and explanatory of the disclosure and are not intended to be restrictive thereof.

While specific language has been used to describe the disclosure, any limitations arising on account of the same are not intended. As would be apparent to a person skilled in the art, various working modifications may be made to the method in order to implement the inventive concept as taught herein.

The figures and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment. For example, the order of processes described herein may be changed and are not limited to the manner described herein. Moreover, the actions of any flow diagram need not be implemented in the order shown; nor do all of the acts need to be necessarily performed. Also, those acts that are not dependent on other acts may be performed in parallel with the other acts. The scope of embodiments is by no means limited by these specific examples.

## Claims

1. A system (100) for controlling multidirectional operation of an elevator comprising:
a processing subsystem (105) hosted on a server (108), and configured to execute on a network to control bidirectional communications among a plurality of modules comprising:
a centralized elevator control module (110) configured to receive a control signal representative of elevator operation from one or more control units deployed at one or more elevator cabins plying within a passageway;
a usage pattern generation module (120) operatively coupled to the centralized elevator control module (110), wherein the usage pattern generation module (120) is configured to:
determine a usage pattern of the one or more elevator cabins in real-time based on the control signal received from the one or more control units; and
utilize a learning model to learn the usage pattern of the one or more elevator cabins using an elevator usage pattern learning technique over a period of time;
an elevator operation evaluation module (130) operatively coupled to the usage pattern generation module (120), wherein the elevator operation evaluation module (130) is configured to:
identify deviation of one or more operational parameters associated with the one or more elevator cabins from corresponding predetermined threshold limits respectively;
detect operational failure of the one or more elevator cabins in an event of operation by employing the learning model upon detection of the one or more operational parameters deviated; and
an elevator rescue module (140) operatively coupled to the elevator operation evaluation module (130), wherein the elevator rescue module (140) is configured to:
receive a rescue command from the centralized elevator control module to initiate a rescue process based on the operational failure of the one or more elevator cabins detected;
identify one or more rescue elevator cabins in proximity to the one or more elevator cabins failed for the rescue process based on a plurality one or more performance objectives; and
activate the one or more rescue elevator cabins identified for flawless operation of transporting a plurality of passengers from a source to destination in an event of emergency.

2. The system (100) as claimed in claim 1, wherein the one or more control units comprises one or more microcontrollers for enabling intercommunication between the one or more elevator cabins via a communication protocol.

3. The system (100) as claimed in claim 1, wherein the usage pattern comprises at least one of a standard wait time of the one or more elevator cabins, a level of congestion for the one or more elevator cabins, a permissible load capacity of the one or more elevator cabins, a peak traffic hours for the one or more elevator cabins, a preferable home landing floor for each of the one or more elevator cabins, average number of passengers waiting on each floors, average speed of each of the one or more elevator cabins or a combination thereof.

4. The system (100) as claimed in claim 1, wherein the learning model is trained to learn and predict the usage pattern of the one or more elevator cabins using the elevator usage pattern learning technique, wherein the elevator usage pattern technique comprises at least one of a support vector machine technique, a back propagation neural network, a radial basis function neural network, a k-means clustering or a combination thereof.

5. The system (100) as claimed in claim 1, wherein the one or more operational parameters comprises at least one of an elevator cabin's door opening time, an elevator cabin's door closing time, a rate of power supply for each of the one or more elevator cabins, power consumption by each of the one or more elevator cabins, a real-time speed of the one or more elevator cabins, number of loads carried by each of the one or more elevator cabins or a combination thereof.

6. The system (100) as claimed in claim 1, wherein the one or more performance objectives comprises at least one of a lower waiting time for the plurality of passengers, an optimal power efficiency of the one or more elevator cabins or a combination thereof.

7. The system (100) as claimed in claim 6, wherein the one or more performance objectives are computed upon identification of relation between total number of floors in a building, force propelled by the one or more elevator cabins, average and velocity of each of the one or more elevator cabins.

8. The system (100) as claimed in claim 1, wherein the processing subsystem (105) comprises a charging determination module (150) operatively couped to the centralized elevator control module (110) and the elevator rescue module (140), wherein the charging determination module (150) is configured to:
determine a charging requirement of the one or more elevator cabins; and
allocate the one or more elevator cabins in a predefined charging station within the passageway for recharging in the event of the operation of transporting the plurality of passengers.

9. A method (300) for controlling multidirectional operation of an elevator comprising:
receiving, by a centralized elevator control module, a control signal representative of elevator operation from one or more control units deployed at one or more elevator cabins plying within a passageway (310);
determining, by a usage pattern generation module, a usage pattern of the one or more elevator cabins in real-time based on the control signal received from the one or more control units (320);
utilizing, by the usage pattern generation module, a learning model to learn the usage pattern of the one or more elevator cabins using an elevator usage pattern learning technique over a period of time (330);
identifying, by an elevator operation evaluation module, deviation of one or more operational parameters associated with the one or more elevator cabins from corresponding predetermined threshold limits respectively (340);
detecting, by the elevator operation evaluation module, operational failure of the one or more elevator cabins in an event of operation by employing the learning model upon detection of the one or more operational parameters deviated (350);
receiving, by an elevator rescue module, a rescue command from the centralized elevator control module to initiate a rescue process based on the operational failure of the one or more elevator cabins detected (360);
identifying, by the elevator rescue module, one or more rescue elevator cabins in proximity to the one or more elevator cabins failed for the rescue process based on a plurality one or more performance objectives (370); and
activating, by the elevator rescue module, the one or more rescue elevator cabins identified for flawless operation of transporting a plurality of passengers from a source to destination in an event of emergency (380).

## Patentansprüche

1. System (100) zur Steuerung des multidirektionalen Betriebs eines Aufzugs, umfassend:
ein Verarbeitungssubsystem (105), das auf einem Server (108) gehostet wird und darauf ausgelegt ist, in einem Netzwerk ausgeführt zu werden, um bidirektionale Kommunikationen zwischen einer Vielzahl von Modulen zu steuern, das Folgendes umfasst:
ein zentralisiertes Aufzugssteuermodul (110), das darauf ausgelegt ist, ein für den Aufzugsbetrieb repräsentatives Steuersignal von einer oder mehreren Steuereinheiten zu empfangen, die in einer oder mehreren Aufzugskabinen eingesetzt werden, die innerhalb eines Durchgangs fahren;
ein Nutzungsmuster-Erzeugungsmodul (120), das operativ mit dem zentralisierten Aufzugssteuermodul (110) gekoppelt ist, wobei das Nutzungsmuster-Erzeugungsmodul (120) auf Folgendes ausgelegt ist:
Ermittlung eines Nutzungsmusters der einen oder mehreren Aufzugskabinen in Echtzeit auf der Grundlage des von der einen oder mehreren Steuereinheiten empfangenen Steuersignals; und
Verwendung eines Lernmodells zum Lernen des Nutzungsmusters der einen oder mehreren Aufzugskabinen mit Hilfe einer Lerntechnik für Aufzugsnutzungsmuster über einen bestimmten Zeitraum;
ein Aufzugsbetriebsauswertungsmodul (130), das operativ mit dem Nutzungsmuster-Erzeugungsmodul (120) gekoppelt ist, wobei das Aufzugsbetriebsauswertungsmodul (130) auf Folgendes ausgelegt ist:
Feststellung der Abweichung eines oder mehrerer Betriebsparameter, die mit der einen oder mehreren Aufzugskabinen verbunden sind, von jeweils zuvor festgelegten entsprechenden Grenzwerten;
Erfassen von Betriebsstörungen der einen oder mehreren Aufzugskabinen bei einem Betriebsvorfall durch Anwendung des Lernmodells beim Erfassen des einen oder mehrerer abgewichenen/r Betriebsparameter/s; und
ein Aufzugsrettungsmodul (140), das operativ mit dem Aufzugsbetriebsauswertungsmodul (130) gekoppelt ist, wobei das Aufzugsrettungsmodul (140) auf Folgendes ausgelegt ist:
Empfangen eines Rettungsbefehls von dem zentralisierten Aufzugssteuermodul, um ein Rettungsverfahren basierend auf der erfassten Betriebsstörung der einen oder mehreren erfassten Aufzugskabinen einzuleiten;
Feststellung einer oder mehrerer Rettungsaufzugskabinen in der Nähe der einen oder mehreren ausgefallenen Aufzugskabinen für das Rettungsverfahren auf der Grundlage einer Vielzahl von einem oder mehreren Leistungszielen; und
Aktivierung der einen oder mehreren Rettungsaufzugskabinen, die für einen einwandfreien Betrieb zur Beförderung einer Vielzahl von Fahrgästen von einem Ausgangspunkt zum Zielort in einem Notfall festgestellt wurden.

2. System (100) nach Anspruch 1, wobei die eine oder mehrere Steuereinheiten einen oder mehrere Mikrocontroller umfassen, um die Interkommunikation zwischen der einen oder mehreren Aufzugskabinen über ein Kommunikationsprotokoll zu aktivieren.

3. System (100) nach Anspruch 1, wobei das Nutzungsmuster mindestens eines der folgenden Merkmale umfasst: eine Standardwartezeit der einen oder mehreren Aufzugskabinen, ein Überlastungsniveau für die eine oder mehrere Aufzugskabinen, eine zulässige Tragfähigkeit der einen oder mehreren Aufzugskabinen, eine Spitzenverkehrszeit für die eine oder mehrere Aufzugskabinen, eine bevorzugte Ausgangsetage für jede der einen oder mehreren Aufzugskabinen, eine durchschnittliche Anzahl von Fahrgästen, die auf jeder Etage warten, eine durchschnittliche Geschwindigkeit jeder der einen oder mehreren Aufzugskabinen, oder eine Kombination davon.

4. System (100) nach Anspruch 1, wobei das Lernmodell darauf trainiert wird, das Nutzungsmuster der einen oder mehreren Aufzugskabinen unter Verwendung der Lerntechnik für Aufzugsnutzungsmuster zu erlernen und vorherzusagen, wobei die Aufzugsnutzungsmustertechnik mindestens eines der folgenden Verfahren umfasst: eine Support-Vektor-Maschinen-Technik, ein neuronales Netzwerk mit Backpropagation, ein neuronales Netzwerk mit radialer Basisfunktion, einen k-Means-Algorithmus, oder eine Kombination davon.

5. System (100) nach Anspruch 1, wobei der eine oder mehrere Betriebsparameter mindestens eine Türöffnungszeit einer Aufzugskabine, eine Türschließzeit einer Aufzugskabine, einen Stromversorgungsanteil für jede der einen oder mehreren Aufzugskabinen, einen Stromverbrauch durch jede der einen oder mehreren Aufzugskabinen, eine Echtzeitgeschwindigkeit der einen oder mehreren Aufzugskabinen, eine Anzahl von Lasten, die von jeder der einen oder mehreren Aufzugskabinen befördert werden, oder eine Kombination davon umfassen.

6. System (100) nach Anspruch 1, wobei das eine oder mehrere Leistungsziele mindestens eines der folgenden Merkmale umfassen: eine geringere Wartezeit für die Vielzahl von Fahrgästen, eine optimale Energieeffizienz der einen oder mehreren Aufzugskabinen, oder eine Kombination davon.

7. System (100) nach Anspruch 6, wobei das eine oder mehrere Leistungsziele auf der Feststellung einer Beziehung zwischen der Gesamtzahl der Etagen in einem Gebäude, der von der einen oder mehreren Aufzugskabinen angetriebenen Kraft sowie dem Durchschnitt und der Geschwindigkeit jeder der einen oder mehreren Aufzugskabinen berechnet werden.

8. System (100) nach Anspruch 1, wobei das Verarbeitungssubsystem (105) ein Ladebestimmungsmodul (150) umfasst, das operativ mit dem zentralisierten Aufzugssteuermodul (110) und dem Aufzugsrettungsmodul (140) gekoppelt ist, wobei das Ladebestimmungsmodul (150) auf Folgendes ausgelegt ist:
Bestimmung einer Ladeanforderung der einen oder mehreren Aufzugskabinen; und
Zuordnung der einen oder mehreren Aufzugskabinen zu einer vordefinierten Ladestation innerhalb des Durchgangs zum Aufladen im Fall des Vorgangs der Beförderung der Vielzahl von Fahrgästen.

9. Verfahren (300) zur Steuerung des multidirektionalen Betriebs eines Aufzugs, umfassend:
Empfangen eines für den Aufzugsbetrieb repräsentativen Steuersignals von einer oder mehreren Steuereinheiten, die in einer oder mehreren in einem Durchgang (310) fahrenden Aufzugskabinen im Einsatz sind, durch ein zentralisiertes Aufzugssteuermodul;
Bestimmung eines Nutzungsmusters der einen oder mehreren Aufzugskabinen in Echtzeit durch ein Nutzungsmuster-Erzeugungsmodul auf der Grundlage des von der einen oder mehreren Steuereinheiten (320) empfangenen Steuersignals;
Verwendung eines Lernmodells durch das Nutzungsmuster-Erzeugungsmodul zum Erlernen des Nutzungsmusters der einen oder mehreren Aufzugskabinen mit Hilfe einer Lerntechnik für Aufzugsnutzungsmuster über einen bestimmten Zeitraum (330);
Feststellung der Abweichung eines oder mehrerer Betriebsparameter, die mit der einen oder mehreren Aufzugskabinen verbunden sind, von jeweils zuvor festgelegten Grenzwerten (340) durch ein Aufzugsbetriebsauswertungsmodul;
Erkennen von Betriebsstörungen der einen oder mehreren Aufzugskabinen bei einem Betriebsvorfall durch das Aufzugsbetriebsauswertungsmodul unter Anwendung des Lernmodells beim Erfassen des einen oder mehrerer Betriebsparameter (350) mit Abweichung;
Empfangen eines Rettungsbefehls durch ein Aufzugsrettungsmodul von dem zentralisierten Aufzugssteuermodul, um ein Rettungsverfahren basierend auf dem erfassten Betriebsausfall der einen oder mehreren Aufzugskabinen einzuleiten (360);
Feststellung einer oder mehrerer Rettungsaufzugskabinen in der Nähe der einen oder mehreren ausgefallenen Aufzugskabinen für das Rettungsverfahren durch das Aufzugsrettungsmodul auf der Grundlage einer Vielzahl von einem oder mehreren Leistungszielen (370); und
Aktivierung der einen oder mehreren Rettungsaufzugskabinen durch das Aufzugsrettungsmodul, die für den einwandfreien Betrieb des Transports einer Vielzahl von Fahrgästen von einem Ausgangspunkt zu einem Ziel in einem Notfall (380) festgestellt wurden.

## Revendications

1. Système (100) de commande du fonctionnement multidirectionnel d'un ascenseur, comprenant :
un sous-système de traitement (105) hébergé sur un serveur (108) et configuré pour être exécuté sur un réseau afin de commander les communications bidirectionnelles parmi une pluralité de modules comprenant :
un module de commande d'ascenseur centralisé (110) configuré pour recevoir un signal de commande représentant un fonctionnement d'ascenseur à partir d'une ou plusieurs unités de commande déployées au niveau d'une ou plusieurs cabines d'ascenseur circulant à l'intérieur d'un passage ;
un module de génération de profil d'utilisation (120) couplé opérationnellement au module de commande d'ascenseur centralisé (110), où le module de génération de profil d'utilisation (120) est configuré pour :
déterminer un profil d'utilisation de l'une ou plusieurs cabines d'ascenseur en temps réel sur la base du signal de commande reçu de l'une ou plusieurs unités de commande ; et
utiliser un modèle d'apprentissage pour apprendre le profil d'utilisation de l'une ou plusieurs cabines d'ascenseur à l'aide d'une technique d'apprentissage de profil d'utilisation d'ascenseur sur une période de temps ;
un module d'évaluation de fonctionnement d'ascenseur (130) couplé opérationnellement au module de génération de profil d'utilisation (120), où le module d'évaluation de fonctionnement d'ascenseur (130) est configuré pour :
identifier l'écart d'un ou plusieurs paramètres de fonctionnement associés à l'une ou plusieurs cabines d'ascenseur, respectivement, par rapport à des limites de seuil prédéterminées correspondantes ;
détecter une défaillance de fonctionnement de l'une ou plusieurs cabines d'ascenseur dans un cas de fonctionnement en utilisant le modèle d'apprentissage lors de la détection de l'un ou plusieurs paramètres opérationnels déviés ; et
un module de secours d'ascenseur (140) couplé opérationnellement au module d'évaluation de fonctionnement d'ascenseur (130), où le module de secours d'ascenseur (140) est configuré pour :
recevoir une commande de secours du module de commande d'ascenseur centralisé pour lancer un processus de secours sur la base de la défaillance opérationnelle de l'une ou plusieurs cabines d'ascenseur détectées ;
identifier une ou plusieurs cabines d'ascenseur de secours à proximité de l'une ou plusieurs cabines d'ascenseur en panne pour le processus de secours sur la base d'une pluralité parmi un ou plusieurs objectifs de performance ; et
activer l'une ou plusieurs cabines d'ascenseur de secours identifiées pour un fonctionnement sans faille consistant à transporter une pluralité de passagers d'une source à une destination en cas d'urgence.

2. Système (100) selon la revendication 1, où l'une ou plusieurs unités de commande comprennent un ou plusieurs microcontrôleurs pour permettre l'intercommunication entre l'une ou plusieurs cabines d'ascenseur par le biais d'un protocole de communication.

3. Système (100) selon la revendication 1, où le profil d'utilisation comprend au moins l'un parmi : un temps d'attente standard de l'une ou plusieurs cabines d'ascenseur, un niveau d'encombrement pour l'une ou plusieurs cabines d'ascenseur, une capacité de charge admissible de l'une ou plusieurs cabines d'ascenseur, une heure de pointe pour l'une ou plusieurs cabines d'ascenseur, un étage d'accueil préféré pour chacune de l'une ou plusieurs cabines d'ascenseur, le nombre moyen de passagers en attente à chaque étage, la vitesse moyenne de chacune de l'une ou plusieurs cabines d'ascenseur, ou une combinaison de ces éléments.

4. Système (100) selon la revendication 1, où le modèle d'apprentissage est formé pour apprendre et prédire le profil d'utilisation de l'une ou plusieurs cabines d'ascenseur à l'aide de la technique d'apprentissage de profil d'utilisation d'ascenseur, la technique de profil d'utilisation d'ascenseur comprenant au moins l'une parmi une technique de machine à vecteur de support, un réseau neuronal à rétro-propagation, un réseau neuronal à fonction de base radiale, un regroupement k-moyennes, ou une combinaison de ces techniques.

5. Système (100) selon la revendication 1, où l'un ou plusieurs paramètres opérationnels comprennent au moins l'un parmi un temps d'ouverture de la porte de cabine d'ascenseur, un temps de fermeture de la porte de cabine d'ascenseur, un taux d'alimentation électrique pour chacune de l'une ou plusieurs cabines d'ascenseur, la consommation d'énergie de chacune de l'une ou plusieurs cabines d'ascenseur, une vitesse en temps réel de l'une ou plusieurs cabines d'ascenseur, le nombre de charges transportées par chacune de l'une ou plusieurs cabines d'ascenseur, ou une combinaison de ceux-ci.

6. Système (100) selon la revendication 1, où l'un ou plusieurs objectifs de performance comprennent au moins l'un parmi un temps d'attente réduit pour la pluralité de passagers, une efficacité énergétique optimale de l'une ou plusieurs cabines d'ascenseur, ou une combinaison de ceux-ci.

7. Système (100) selon la revendication 6, où l'un ou plusieurs objectifs de performance sont calculés lors de l'identification de la relation entre le nombre total d'étages dans un bâtiment, la force propulsée par l'une ou plusieurs cabines d'ascenseur, la moyenne et la vitesse de chacune de l'une ou plusieurs cabines d'ascenseur.

8. Système (100) selon la revendication 1, où le sous-système de traitement (105) comprend un module de détermination de charge (150) couplé opérationnellement au module de commande d'ascenseur centralisé (110) et au module de secours d'ascenseur (140), où le module de détermination de charge (150) est configuré pour :
déterminer les besoins en charge de l'une ou plusieurs cabines d'ascenseur ; et
répartir l'une ou plusieurs cabines d'ascenseur dans une station de charge prédéfinie à l'intérieur du passage pour les recharger en cas de fonctionnement consistant à transporter la pluralité de passagers.

9. Procédé (300) de commande du fonctionnement multidirectionnel d'un ascenseur comprenant :
recevoir, par le biais d'un module de commande d'ascenseur centralisé, un signal de commande représentant un fonctionnement d'ascenseur à partir d'une ou plusieurs unités de commande déployées au niveau d'une ou plusieurs cabines d'ascenseur circulant à l'intérieur d'un passage (310) ;
déterminer, par le biais d'un module de génération de profil d'utilisation, un profil d'utilisation de l'une ou plusieurs cabines d'ascenseur en temps réel sur la base du signal de commande reçu de l'une ou plusieurs unités de commande (320) ;
utiliser, par le biais du module de génération de profil d'utilisation, un modèle d'apprentissage pour apprendre le profil d'utilisation de l'une ou plusieurs cabines d'ascenseur à l'aide d'une technique d'apprentissage de profil d'utilisation d'ascenseur sur une période de temps (330) ;
identifier, par le biais d'un module d'évaluation de fonctionnement d'ascenseur, l'écart d'un ou plusieurs paramètres opérationnels associés à l'une ou plusieurs cabines d'ascenseur par rapport à des limites de seuil prédéterminées correspondantes (340) ;
détecter, par le biais du module d'évaluation de fonctionnement d'ascenseur, une défaillance opérationnelle de l'une ou plusieurs cabines d'ascenseur dans un cas de fonctionnement en utilisant le modèle d'apprentissage lors de la détection de l'un ou plusieurs paramètres opérationnels écartés (350) ;
recevoir, par le biais d'un module de secours d'ascenseur, une commande de secours du module de commande d'ascenseur centralisé pour lancer un processus de secours sur la base de la défaillance opérationnelle de l'une ou plusieurs cabines d'ascenseur détectées (360) ;
identifier, par le biais du module de secours d'ascenseur, une ou plusieurs cabines d'ascenseur de secours à proximité de l'une ou plusieurs cabines d'ascenseur en panne pour le processus de secours sur la base d'une pluralité d'un ou plusieurs objectifs de performance (370) ; et
activer, par le biais du module de secours d'ascenseur, l'une ou plusieurs cabines d'ascenseur de secours identifiées pour un fonctionnement sans faille consistant à transporter une pluralité de passagers d'une source à une destination en cas d'urgence (380).
